# DEMANDE DE BREVET EUROPEEN

(11) **EP 1 168 143 A1**
(43) Date de publication de la demande: **02.01.2002**
(21) Numéro de dépôt: 01202348.7
(22) Date de dépôt: 18.06.2001
(51) Int. Cl.: G06F 1/16

(54) **Dispositif portable à processeur comportant une pluralité de modules d'écran dont au moins un module d'écran repliable sur un module d'écran principal**

(30) Priorité: 27.06.2000 FR 0008269
(71) Demandeur: Koninklijke Philips Electronics N.V., 5621 BA Eindhoven (NL)
(72) Inventeur: Bruzzone, Raul, 75008 Paris (FR)
(74) Mandataire: de la Fouchardière, Marie-Noelle

(57) **Abrégé**

L'invention concerne un dispositif, par exemple un communicateur personnel mobile comportant au moins un module d'écran principal et un module d'écran repliable sur ledit module d'écran principal. Le module d'écran principal et le module d'écran repliable comportent un senseur pour détecter l'état de déploiement du module d'écran repliable. L'image à afficher sur l'écran est adaptée en taille et en résolution à l'état de déploiement du module repliable.

L'invention fournit ainsi un dispositif ayant un écran de taille modulable en fonction des applications utilisées.

Applications : Dispositif électronique portable à écran, par exemple organiseur, ordinateur de poche, communicateur mobile personnel.

## Description

### Domaine de l'invention

L'invention concerne un dispositif portable à processeur comportant une pluralité de modules dont au moins un module d'écran repliable sur un autre module d'écran dit module principal, ledit dispositif comportant un senseur de détection de l'état de déploiement du module repliable.

L'invention a d'importantes applications dans le domaine des télécommunications mobiles. Elle s'applique en particulier aux communicateurs personnels mobiles.

### Arrière plan technologique de l'invention

La demande de brevet déposée au Royaume Uni sous le numéro GB 2320591 décrit un dispositif portable comportant deux modules d'écran repliables l'un sur l'autre. L'ouverture du dispositif signale au processeur du dispositif qu'il doit utiliser la surface totale de l'écran.

L'invention a pour but de proposer des moyens particulièrement efficaces pour gérer la surface d'écran disponible.

### Résumé de l'invention

Un dispositif selon l'invention et tel que décrit dans le paragraphe introductif est caractérisé en ce que lesdits modules d'écran étant aptes à afficher une image contenant une ou plusieurs fenêtre(s), ledit dispositif comporte des moyens d'adaptation de l'image à afficher en fonction dudit état de déploiement, lesdits moyens d'adaptation étant prévus pour modifier la taille d'une ou plusieurs fenêtre(s) d'une image à afficher en conservant un rapport hauteur sur largeur constant.

L'invention propose donc un dispositif portable dont la taille d'écran peut être modifiée en déployant des modules d'écran. Des senseurs détectent l'état de déploiement de l'écran, et l'image à afficher est adaptée en fonction de cet état de déploiement. A tout moment l'utilisateur peut donc choisir le meilleur compromis entre encombrement de l'écran et surface d'affichage nécessaire pour les applications courantes. Par exemple, si plusieurs fenêtres doivent être visibles simultanément, il est avantageux de déployer plusieurs modules d'écran. De même, pour des applications dans lesquelles les images contiennent beaucoup de texte (pour la lecture de magazines ou de journaux par exemple), il est souhaitable de déployer un nombre maximum de modules d'écran pour améliorer la lisibilité. En revanche lorsqu'on utilise des applications classiques d'organiseur ou de téléphonie, un écran de petite taille est suffisant.

Un dispositif selon l'invention comporte avantageusement un module d'écran de base, et un ou plusieurs modules d'écran repliables sur le module d'écran de base, de sorte que le module d'écran de base soit entièrement recouvert lorsque le ou les modules d'écran repliables sont repliés. Cette configuration offre un moyen simple de protéger l'écran lorsqu'il n'est pas utilisé.

Par ailleurs, de façon avantageuse un ou plusieurs modules d'écran repliables sont eux-mêmes constitués d'un module principal, d'un module repliable sur ledit module principal, et d'un senseur de détection de l'état de déploiement dudit module repliable. Cette configuration permet d'augmenter encore le caractère modulable de l'écran.

### Brève description des dessins

L'invention sera mieux comprise et d'autres détails apparaîtront dans la description qui va suivre, en regard des dessins annexés, donnés à titre d'exemples non limitatifs et dans lesquels :
- les figure 1A à 1D sont des schémas d'un exemple de dispositif selon l'invention dans plusieurs états de déploiement des modules d'écran repliables,
- la figure 2 est un schéma fonctionnel d'un exemple de dispositif selon l'invention,
- la figure 3 un schéma d'un exemple de senseur magnétique utilisé dans un dispositif selon l'invention,
- la figure 4 est un schéma d'un exemple de senseur électronique utilisé dans un dispositif selon l'invention,
- la figure 5 est un diagramme exposant un exemple de stratégie d'affichage utilisable par un dispositif selon l'invention,
- les figures 6A à 6C sont des schémas d'exemples d'affichage pour différentes utilisations d'un dispositif selon l'invention.

### Description d'un mode de réalisation préférentiel

Le dispositif qui va maintenant être décrit à titre d'exemple est un communicateur personnel qui utilise la norme UMTS (de l'anglais Universal Mobile Telecommunications System) pour l'émission et la réception de données.

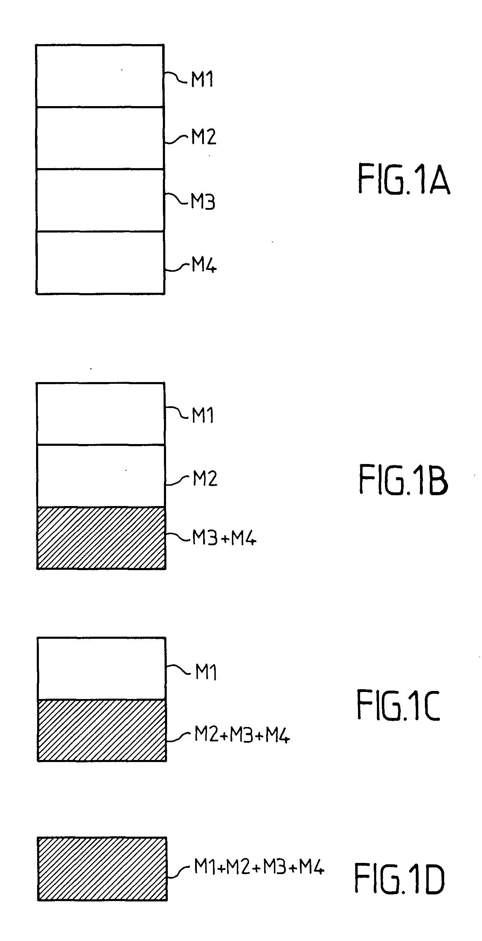

Sur la figure 1, on a représenté un exemple de communicateur selon l'invention dans différentes positions d'utilisation. Les zones hachurées constituent la partie de l'écran qui, dans la position considérée, n'est pas opérationnelle. Ce communicateur est constitué d'un écran comportant quatre modules référencés M1 à M4.

Sur la figure 1A, tous les modules sont déployés. La surface opérationnelle de l'écran est maximum. Sur la figure 1B, le module M4 est replié sur le module M3. La surface opérationnelle de l'écran est égale à la moitié de la surface maximum.

Sur le figure 1C, les modules M3 et M4 sont repliés sur le module M2. La surface opérationnelle de l'écran est alors égale à ¼ de la surface maximum.

Enfin sur la figure 1D, les modules M4, M3 et M2 sont repliés sur le module M1. Dans cette position, le module M1 est entièrement recouvert de sorte que l'écran est protégé contre les chocs éventuels.

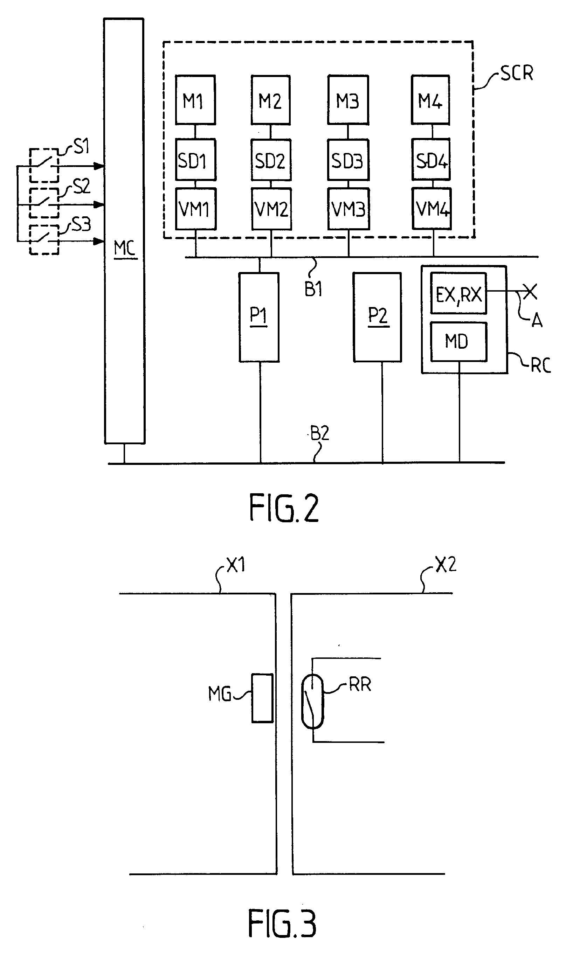

D'après la figure 2, un dispositif selon l'invention comporte :
- trois senseurs S1 à S3 pour détecter l'état de déploiement des modules d'écran M2, M3 et M4;
- un microcontrôleur MC qui traite les signaux venant des senseurs S1 à S3, et certaines fonctions de contrôle et de signalisation définies par la norme UMTS ;
- un processeur de données P1 qui code et décode des données audio et/ou vidéo et qui compose les images à afficher sur l'écran ;
- un ensemble SCR de 4 mémoires vidéo VM1 à VM4, de 4 contrôleurs d'écran SD1 à SD4 et de 4 modules d'écran M1 à M4 ; cet ensemble SCR est relié au processeur P1 par un premier bus B1 ;
- un processeur d'application P2 qui héberge un système d'exploitation et des programmes spécifiques comme par exemple un navigateur Internet ;
- un module de communication mobile RC qui comporte notamment un émetteur/ récepteur radio EX/RX connecté à une antenne d'émission/ réception A, et un modem radio MD relié à l'émetteur/ récepteur radio EX/RX.
Les processeurs P1 et P2, le modem MD du module de communication radio RC, et le microcontrôleur MC sont reliés par un second bus B2.

Sur la figure 3, on a représenté un exemple de senseur de détection de l'état de déploiement d'un module d'écran X1 repliable sur un module d'écran principal X2. Dans cet exemple de réalisation, le senseur est un senseur magnétique. Il est constitué par un relais à lame RR monté sur le module d'écran principal X2, et un aimant MG monté sur le module d'écran repliable X1.

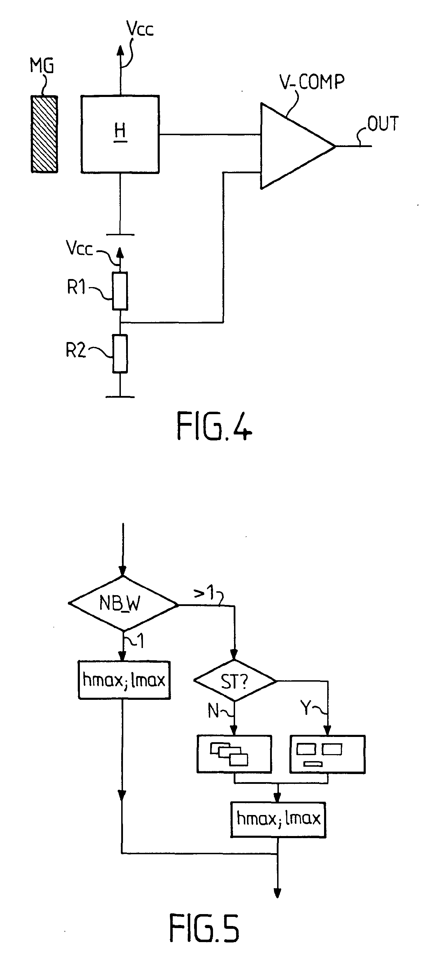

Dans un autre mode de réalisation représenté sur la figure 4, le senseur est un senseur électronique. Ce senseur électronique comporte un aimant MG monté sur le module d'écran repliable X1. Il comporte également un senseur à effet Hall H, un comparateur de tension V-COMP et un diviseur de tension constitué de deux résistances R1 et R2, le tout monté sur le module d'écran principal X2. La sortie du senseur H est portée sur une première entrée du comparateur V-COMP. L'autre entrée du comparateur V-COMP reçoit une tension de référence fournie par le diviseur de tension R1 / R2. Le courant en sortie du senseur à effet Hall est proportionnel à intensité du champ magnétique environnant. Lorsque l'aimant est près du senseur H, le courant délivré par le senseur H augmente. Ce signal est détecté par le comparateur de tension V-COMP. Le signal de sortie OUT du comparateur de tension V-COMP est un signal binaire qui est utilisé pour indiquer l'état déployé ou non déployé du module d'écran repliable X1 par rapport au module d'écran principal X2. Le senseur H est constitué par exemple par le circuit intégré TI173L fabriqué par Texas Instruments.

Chaque senseur transmet au microcontrôleur un signal qui indique l'état de déploiement du module repliable auquel il est associé. Le microcontrôleur lit ces signaux régulièrement pour mettre à jour une mémoire d'état ST qui indique l'état de déploiement global du dispositif.

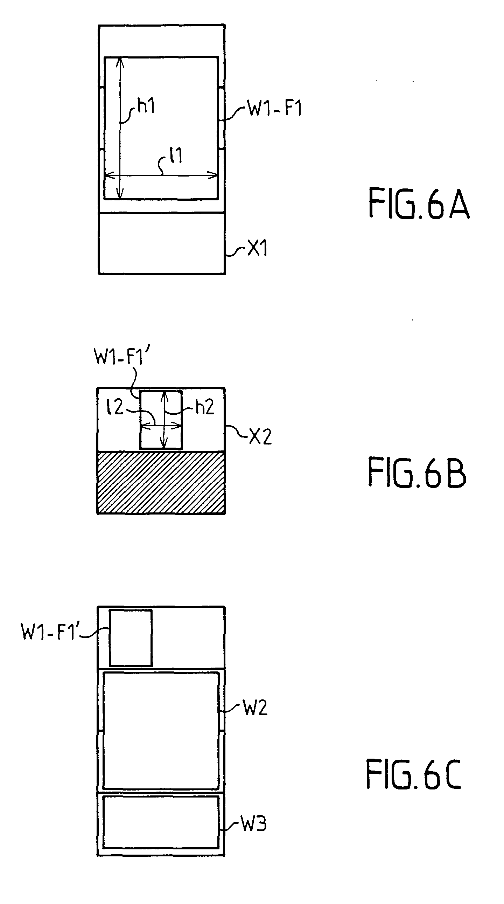

L'image à afficher à l'écran est élaborée par le processeur P1 à partir de fenêtres reçues, en fonction du contenu de la mémoire d'état ST. On peut imaginer de nombreuses façons d'adapter l'image à afficher à la surface opérationnelle de l'écran. Sur la figure 5, on a représenté à titre d'exemple, sous forme d'organigramme, une stratégie d'adaptation de l'image à afficher. Cette stratégie dépend du nombre de fenêtres à afficher simultanément (NB_W):
- S'il y a plusieurs fenêtres à afficher simultanément (NB_W>1), la stratégie d'affichage diffère selon que l'écran est ou non entièrement déployé.
- Si l'écran est entièrement déployé (cas Y), les fenêtres sont juxtaposées, c'est-à-dire réparties sur la surface d'écran disponible.
- Sinon (cas N), les fenêtres sont superposées, chaque fenêtre pouvant alors occuper la surface totale disponible.

La taille des fenêtres (h ; I) est fixée à la taille maximum possible en fonction de la surface d'écran disponible et du nombre de fenêtres à afficher, en conservant un rapport hauteur sur largeur constant (h/l=R).

Le contenu de la mémoire d'état ST étant mis à jour régulièrement, il est notamment possible de changer de configuration en cours de session.

Sur la figure 6 on a représenté des exemples d'affichage dans différentes configurations de déploiement des modules de l'écran. Sur la figure 6A, tous les modules d'écran sont déployés, et une seule fenêtre W1 est affichée. Le format d'affichage F1 de cette fenêtre W1 est le format maximum autorisé par la surface opérationnelle X1 de l'écran pour conserver un rapport hauteur sur largeur constant (h1/l1=R) par rapport à la fenêtre reçue. Sur la figure 6B, on a représenté l'affichage de la même fenêtre W1, lorsque le module M2 est le seul module déployé. Le format d'affichage F1' de cette fenêtre est le format maximum autorisé par la surface opérationnelle X2 de l'écran pour conserver un rapport hauteur sur largeur constant (h2/l2=R). Sur la figure 6C, on a représenté l'affichage simultané de plusieurs fenêtres W1 à W3 sur l'écran complètement déployé. Le format d'affichage de chaque fenêtre est déterminé de façon à conserver un rapport hauteur sur largeur constant, et à utiliser au maximum la surface disponible X1.

On va maintenant donner des exemples d'applications d'un dispositif selon l'invention.

### - premier exemple : organisation de vacances

Une personne qui souhaite organiser ses vacances utilise un communicateur personnel selon l'invention pour consulter le site d'une agence de voyage. Un premier écran de petite taille lui propose différentes options. La configuration de la figure 1B est bien adaptée à cette utilisation. Dans une phase ultérieure, elle reçoit un autre écran avec une carte des destinations possibles, et elle souhaite établir une vidéo-conférence avec un membre de sa famille pour lui demander son avis sur ce voyage. Plusieurs fenêtres seront alors actives simultanément. Dans ce cas la configuration de la figure 1A est la mieux adaptée.

### - deuxième exemple : lecture d'un magazine électronique

Une personne qui voyage en train souhaite acheter un magazine électronique à la gare. Pour cela, elle ouvre son communicateur dans la position représentée sur la figure 1C, et elle consulte le site du magazine électronique de son choix. Elle paye avec sa carte de paiement pour télécharger le magazine via une station de base UMTS située dans la gare. Après s'être installée dans le train, elle ouvre son communicateur dans la position indiquée sur la figure 1A afin de lire son magazine. Avantageusement, la position de la figure 1A correspond à un format A4.

L'invention n'est pas limitée aux modes de réalisation qui viennent d'être décrits à titre d'exemple. En particulier, elle n'est pas limitée à des dispositifs qui comportent exclusivement des modules d'écran. Par exemple, elle s'applique aussi à un dispositif qui comporte, en plus des modules d'écran du type décrit plus haut, un ou plusieurs modules de clavier.

Le dispositif qui a été décrit à titre d'exemple comporte 3 modules repliables. Il va de soi que l'invention s'applique à des dispositifs ayant un nombre quelconque de modules repliables.

Le dispositif qui a été décrit à titre d'exemple utilise la norme UMTS pour les communications mobiles. Bien que l'invention soit particulièrement intéressante dans le domaine des télécommunications mobiles, elle est applicable à d'autre types d'équipements par exemple à des organiseurs, ou à des ordinateurs de poche. Elle est aussi applicables à des communicateurs personnels qui utilisent d'autres normes de communication, par exemple la norme GPRS.

## Revendications

1. Dispositif portable à processeur (MP, P1 , P2) comportant une pluralité de modules (1, 2, 2a, 2b, 3, 3a, 3c) dont au moins un module d'écran repliable (2 et 3, 2b, 3b) sur un autre module d'écran dit module principal (1,2a, 3a respectivement), ledit dispositif comportant un senseur (S1, S2, S3, S4) de détection de l'état de déploiement du module repliable, **caractérisé en ce que** lesdits modules d'écran étant aptes à afficher une image contenant une ou plusieurs fenêtre(s), ledit dispositif comporte des moyens d'adaptation de l'image à afficher en fonction dudit état de déploiement (ST, MC, P1), lesdits moyens d'adaptation étant prévus pour modifier la taille d'une ou plusieurs fenêtre(s) d'une image à afficher en conservant un rapport hauteur sur largeur constant.

2. Dispositif selon la revendication 1, **caractérisé en ce que** lesdits moyens d'adaptation sont prévus pour déterminer la taille des fenêtres en fonction du nombre de fenêtre(s) à afficher simultanément.

3. Dispositif selon la revendication 1, **caractérisé en ce que** lesdits moyens d'adaptation sont prévus pour que, lorsqu'une image à afficher contient plusieurs fenêtres, lesdites fenêtres soient juxtaposées si le module repliable est déployé, et superposées sinon.

4. Dispositif selon la revendication 1, **caractérisé en ce que** ledit senseur est un senseur magnétique.

5. Dispositif selon la revendication 1, **caractérisé en ce que** ledit senseur est un senseur électronique.

6. Dispositif selon la revendication 1, **caractérisé en ce qu'**il comporte un module d'écran de base et un ou plusieurs modules d'écran repliables sur ledit module d'écran de base, de sorte que le module d'écran de base soit entièrement recouvert lorsque le ou les modules d'écran repliables sont repliés.

7. Dispositif selon la revendication 1, **caractérisé en ce que** ledit module d'écran repliable est lui-même constitué d'un module principal, d'un module repliable sur ledit module principal, et d'un senseur de détection de l'état de déploiement dudit module repliable.

8. Communicateur personnel **caractérisé en ce qu'**il comporte un dispositif selon la revendication 1.

9. Communicateur personnel **caractérisé en ce qu'**il comporte un dispositif selon la revendication 6.

10. Communicateur personnel **caractérisé en ce qu'**il comporte un dispositif selon la revendication 7.
